# EUROPÄISCHE PATENTSCHRIFT

(11) **EP 3 070 721 B1**
(45) Veröffentlichungstag und Bekanntmachung des Hinweises auf die Patenterteilung: **29.01.2020**
(21) Anmeldenummer: 16000655.7
(22) Anmeldetag: 17.03.2016
(51) Int. Cl.: H01F 7/16, F16K 31/06

(54) **BETÄTIGUNGSVORRICHTUNG**
ACTUATION DEVICE
DISPOSITIF D'ACTIONNEMENT

(30) Priorität: 20.03.2015 DE 102015003672
(43) Veröffentlichungstag der Anmeldung: 21.09.2016
(73) Patentinhaber: Hydac Electronic GmbH, 66128 Saarbrücken (DE)
(72) Erfinder: Fuchs, Patrik, 66459 Kirkel (DE); Jacobus, Heinz, 66125 Dudweiler (DE)
(74) Vertreter: Bartels und Partner, Patentanwälte

(56) Entgegenhaltungen:
- CN-A- 103 700 464
- DE-A1- 4 208 367
- DE-A1- 19 705 598
- DE-A1-102009 046 186
- DE-A1-102012 019 193
- DE-B4- 10 195 791
- DE-U1- 9 005 411
- US-A- 3 900 822
- US-A1- 2005 133 099

## Beschreibung

Die Erfindung betrifft eine Betätigungsvorrichtung, insbesondere zum Betätigen von Ventilen, mit den Merkmalen im Oberbegriff von Anspruch 1. Betätigungsvorrichtungen dieser Art, die man in der Fachsprache auch als "Betätigungsmagnete" bezeichnet, sind Stand der Technik und sind auf dem Markt in einer Vielzahl von Ausführungsformen frei erhältlich. Das Dokument DE 10 2004 028 871 A1 zeigt beispielsweise eine Vorrichtung dieser Gattung, die zur Betätigung von Ventilen vorgesehen ist, die von außen her an das Gehäuse anschließbar sind. Bei elektrischer Erregung der Spulenwicklung über einen an der Steckerplatte eines Anschlusssteckers anschließbaren Gerätesteckers legen der Magnetanker und die mit ihm verbundene Betätigungsstange eine vorgebbare Wegstrecke zurück, um hierbei einen Schalt- oder Betätigungsvorgang auszulösen, beispielsweise bei einem von außen her angeschlossenen Ventil zum Steuern oder Absperren von Fluidströmen. Entfällt die Bestromung, ist der Betätigungsmagnet also stromlos, wird regelmäßig der Magnetanker mittels einer vorzugsweise durch eine Rückstellfeder erzeugte Rückstellkraft für einen weiteren Betätigungsvorgang bei erneutem Bestromen der Spulenwicklung rückgestellt. Betätigungsvorrichtungen dieser Art sind auf den verschiedensten technischen Gebieten für eine Vielzahl von Betätigungsfunktionen einsetzbar. Angesichts der großen Stückzahlen, mit denen derartige Betätigungsvorrichtungen bereits für Anwendungen in der Antriebstechnik, etwa für mobile Arbeitsgerätschaften oder Fahrzeuge unterschiedlicher Art, herzustellen sind, stellen die Fertigungskosten für die Betätigungsvorrichtungen einen bedeutenden wirtschaftlichen Faktor dar.

Die US 3 900 822, die US 2005/0133099 A1, die DE 10 2009 046 186 A1, die DE 101 95 791 B4, die DE 90 05 411 U1, CN 103700464 A, die DE 197 05 598 A1 und die DE 42 08 367 A1 beschreiben jeweils eine gattungsgemäße Betätigungsvorrichtung, insbesondere zum Betätigen von Ventilen, mit einem Gehäuse und einem darin angeordneten Spulenkörper mit Spulenwicklung, der zumindest Teile eines Polrohres und eines sich an dessen eines Ende anschließenden Polkerns umfasst, mit einem Magnetanker, der in einem sich zumindest teilweise innerhalb des Polrohres befindlichen Ankerraum durch Magnetkraftwirkung entgegen einer Rückstellkraft längsverschiebbar ist, und mit einer Betätigungsstange, die sich von einem axialen Ende des Magnetankers weg für die Betätigung einer Gerätschaft, wie eines Ventils, nach außen erstreckt, wobei der Magnetanker für seine Längsverschiebung mittels Lagerstellen geführt ist, von denen mindestens je eine außerhalb jedes axialen Endes des Magnetankers und sämtliche außerhalb des Ankerraums gelegen sind, wobei zur Führung des Magnetankers bei dessen Axialbewegungen an dessen beiden axialen Enden ein koaxial vorspringendes Schaftteil vorgesehen ist, an denen jeweils eine Gleitlagerstelle gebildet ist, wobei das Schaftteil für die eine Gleitlagerstelle an einem Lagerzapfen gebildet ist, der sich vom anderen axialen Ende des Magnetankers koaxial in eine Lagerbohrung des Polkerns erstreckt.

Eine weitere Betätigungsvorrichtung geht aus der DE 10 2012 019 193 A1 hervor.

Im Hinblick hierauf stellt sich die Erfindung die Aufgabe, eine Betätigungsvorrichtung der betrachteten Gattung zur Verfügung zu stellen, die rationell und kostengünstig herstellbar ist und sich gleichzeitig durch ein gutes Betriebsverhalten auszeichnet.

Diese Aufgabe ist erfindungsgemäß durch eine Betätigungsvorrichtung gelöst, die die Merkmale des Patentanspruchs 1 in seiner Gesamtheit aufweist.

Gemäß dem Kennzeichen von Anspruch 1 ist vorgesehen, dass der Magnetanker eine als Sacklochbohrung ausgebildete Bohrung aufweist, in die der Lagerzapfen mit einem Endabschnitt eingreift.

Dadurch, dass der Magnetanker für seine Längsverschiebung mittels Lagerstellen geführt ist, von denen mindestens je eine außerhalb jedes axialen Endes des Magnetankers und sämtliche außerhalb des Ankerraums gelegen sind, ist für die Betätigungsvorrichtung eine wesentlich vereinfachte Bauweise realisierbar. Bei den Lösungen gemäß dem Stand der Technik mit im Inneren des Polrohres gebildeter Gleitlagerung für den Magnetanker sind Polkern und Polrohr gesonderte Bauteile, wobei letzteres als dünnwandiges Rohr ausgeführt ist. Die Herstellung des dünnwandigen Polrohres ist teuer, insbesondere wenn dieses selbst die Führung und die Gleitlagerung des Magnetankers bildet. Das Polrohr ist bei den bekannten Lösungen durch eine Versickung in einer Stemmnut festgelegt, wobei ein O-Ring zur Abdichtung des Ankerraums erforderlich ist. Bei dünnwandigem Polrohr ist die erforderliche magnetische Trennung mittels einer dünnen Schweißverbindung oder Lötverbindung in der Herstellung schwierig, weil Lunkerbildung beim Löten/Schweißen vermieden werden muss. Auch erfordert ein Einsetzen eines Gleitlagers über die offene Trennstelle einen erheblichen Montageaufwand. Die Erfindung vermeidet sämtliche der vorstehend genannten Nachteile des Standes der Technik, weil bei aus dem Bereich des Ankerraums verlegter Gleitlagerung kein dünnwandiges, über eine Versickung am Polkern festzulegendes Polrohr erforderlich ist, sondern diese beiden Bauteile unmittelbar über eine als magnetische Trennung dienende Schweißnaht, ohne Bildung einer Engstelle, miteinander zusammenhängen können. Dadurch entfällt nicht nur die Versickung mit zugehöriger Stemmnut, sondern auch der O-Ring, der den Ankerraum an dieser Verbindungsstelle abdichtet. Durch den Wegfall einer O-Ring-Nut und einer Verstemmnut sind auch eine Sättigungsstelle der Flussdichte und eine dadurch verursachte Verringerung der Magnetkraft vermieden, während gleichzeitig eine Verringerung der Herstellungskosten erreichbar ist.

Es ist ferner vorgesehen, dass eine zur Erzeugung der Rückstellkraft vorgesehene Feder zwischen einem außerhalb des Polrohres befindlichen Federanschlag an der Betätigungsstange und einem am äußeren Ende des Polrohres befindlichen Abschlussteil eingespannt ist, durch das die Betätigungsstange nach außen geführt ist. Bei derart extern gelagerter Feder erübrigt sich die Ausbildung eines Federeinbauraums im Polkern und/oder Magnetanker. Dies ermöglicht zum einen eine einfachere, rationell und kostengünstig herstellbare Bauweise und eine Verringerung der Montagekosten. Zum anderen entfällt der Verlust an Magnetkraft, wie er bei Einbau größerer Federn durch die erforderliche Aussparung im Polkern verursacht ist. Bei externer Lagerung der Feder lässt sich auch bei Federn, die zur Erreichung einer gewünschten Kraft/Weg-Kennlinie entsprechend groß dimensioniert sind, eine maximale Magnetkraft erreichen.

Zur Führung des Magnetankers mittels externer Lagerstellen ist an dessen beiden axialen Enden ein koaxial vorspringendes Schaftteil vorgesehen, an denen jeweils eine Gleitlagerstelle gebildet ist.

Mit besonderem Vorteil kann die Anordnung hierbei so getroffen sein, dass das Schaftteil für die andere Gleitlagerstelle an der Betätigungsstange gebildet ist, die sich vom einen axialen Ende des Magnetankers weg durch ein Abschlussteil am äußeren Ende des Polrohres hindurch nach außen erstreckt und für die Betätigung eines betreffenden Ventils mit diesem mechanisch kuppelbar ist.

Mit besonderem Vorteil kann der Lagerzapfen in die Sacklochbohrung mit einem verjüngten Endabschnitt eingreifen und weiter bevorzugt eine von ihm durchgriffene Antiklebscheibe am Magnetanker fixieren. Der Lagerzapfen kann in der Bohrung mittels einer Presspassung festgelegt sein. Alternativ könnte ein mit einem Außengewinde versehener Lagerzapfen in ein Innengewinde der Bohrung eingeschraubt sein. Die vom Lagerzapfen zusätzlich zur Ausbildung der Lagerstelle bewirkte Fixierung der Antiklebscheibe führt zu einer Verringerung der Geräuschentwicklung beim Betrieb.

Bei bevorzugten Ausführungsbeispielen sind die Gleitlagerstellen durch Lagerhülsen gebildet, deren eine in der Lagerbohrung des Polkerns und deren andere in dem Abschlussteil des Polrohres angeordnet ist, durch das hindurch sich die Betätigungsstange erstreckt.

In besonders vorteilhafter Weise eröffnet sich durch die externe Lagerung der Feder die Möglichkeit, mit geringem baulichem Aufwand eine Einrichtung zur genauen Einstellung der Federkraft bereitzustellen. Bei besonders vorteilhaften Ausführungsbeispielen ist diesbezüglich die Anordnung derart getroffen, dass eine die Rückstellkraft erzeugende Schraubenfeder auf der Betätigungsstange zwischen Abschlussteil des Polrohres und einem als Federanschlag dienenden, von der Betätigungsstange durchgriffenen Ringkörper eingespannt ist, der auf der Betätigungsstange in gewählten Axialpositionen festlegbar ist. Auf einfache und kostengünstige Weise ist dadurch eine Kalibrierung der jeweiligen Federwirkung möglich und damit die Einstellung einer gewünschten Kraft/Hub-Kennlinie, so dass die Betätigungsvorrichtung als proportionaler Magnet, beispielsweise für pneumatische Druckventile, ausbildbar ist.

Die Betätigungsstange kann durch eine außerhalb des Ankerraumes gelegene Lagerstelle im Abschlussteil geführt sein. Das Abschlussteil kann als Federanschlag für die Feder eine Anlagefläche aufweisen, die umfänglich von einem Außengewinde am Ende des Polrohres umgeben ist. Die Feder kann die Lagerstelle für die Betätigungsstange zumindest teilweise umfassen.

Nachstehend ist die Erfindung anhand von in der Zeichnung dargestellten Ausführungsbeispielen im Einzelnen erläutert. Es zeigen:
- Fig. 1: einen Längsschnitt eines Ausführungsbeispiels der Erfindung;
- Fig. 2: eine Vorderansicht eines abgewandelten Ausführungsbeispiels; und
- Fig. 3: einen abgebrochenen Teillängsschnitt des Ausführungsbeispiels von Fig. 2, der den der Betätigungsstange des Magnetankers zugeordneten Bereich zeigt.

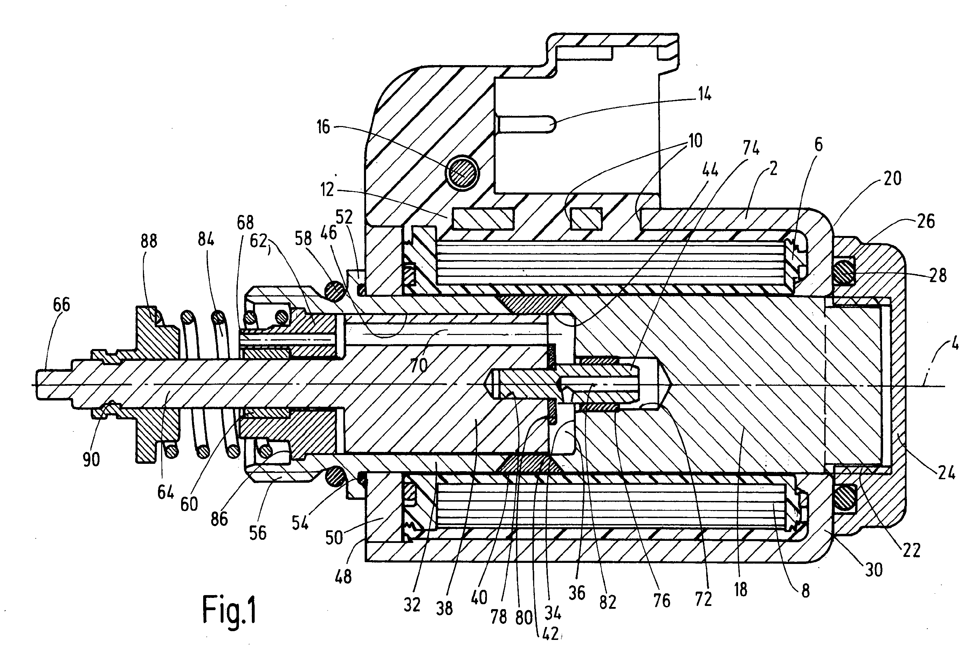

Die Figur 1 zeigt ein Ausführungsbeispiel der erfindungsgemäßen Betätigungsvorrichtung in Form eines proportionalen "ziehenden" Magneten, der beispielsweise für eine Betätigung pneumatischer Druckventile vorgesehen ist. Derartige, zu betätigende Gerätschaften, die in der Figur nicht dargestellt sind, sind von außen her an den Betätigungsmagneten anschließbar. Das Ausführungsbeispiel weist ein Magnetgehäuse 2 aus magnetisch leitendem Metallwerkstoff auf, das sich in Form eines kreiszylindrischen Mantels entlang einer Zylinder- oder Längsachse 4 erstreckt. Im Gehäuse 2 ist entlang der zylindrischen Innenwand ein Spulenkörper 6 aus Kunststoff angeordnet, auf dem sich eine Spulenwicklung 8 befindet. Über Wanddurchbrüche 10 des Gehäuses 2 ist eine Steckerplatte 12 aus Kunststoff derart angespritzt, dass die Kunststoffmasse die Außenseite der Spulenwicklung 8 umgibt. An der Steckerplatte 12 befindet sich eine Steckereinrichtung 14 für einen Anschlussstecker zur Erregung der Spulenwicklung 8 sowie eine eingespritzte Diode 16, die Bestandteil des elektrischen Erregersystems ist.

Der Spulenkörper 6 umgibt einen Polkern 18, der sich koaxial zur Längsachse 4 über das in der Figur rechtsseitig gelegene, offene Ende 20 des Gehäuses hinaus erstreckt und in dem über das Ende 20 vorstehenden Endabschnitt ein Außengewinde 22 aufweist. Ein auf dieses aufgeschraubter Deckel 22 verschließt das offene Ende 20 des Gehäuses 2 und weist eine Ring-nut 26 mit einem O-Ring 28 zur Abdichtung am gewölbten Endrand 30 des Gehäuses 2 auf.

Auf der dem Ende 20 des Gehäuses 2 entgegengesetzten inneren Seite schließt sich an den Polkern 18 ein Polrohr 32 an, das, zusammen mit einer Vertiefung 34 am inneren Ende des Polkerns 18 einen Ankerraum 36 für einen Magnetanker 38 bildet. Die Vertiefung 34 stellt einen Hubweg für eine bei Erregung der Spulenwicklung 8 erfolgende Längsbewegung des Ankers 38 zur Verfügung. Der Polkern 18 geht in das Polrohr 32 über eine aus magnetisch nichtleitendem Material gebildete Schweißstelle 40 unmittelbar über, die eine Trennstelle für das Magnetsystem bildet. Dabei ist der Polkern 18 am Übergang zur Schweißstelle 40 derart abgeschrägt, dass die Seitenwand 44 der Vertiefung 34 einen spitzen Endrand 42 bildet. Über die Schweißstelle 40 hinweg geht die Seitenwand 44 absatzlos in die Innenwand 46 des Polrohres 32 über, die den Ankerraum 36 seitlich begrenzt.

Das Polrohr 32 erstreckt sich über das in der Figur links gelegene Gehäuseende 48 hindurch nach außen, wobei es eine das Gehäuseende 48 bildende Polplatte 50 durchgreift, an der ein Flanschrand 52 des Polrohres 32 mit einem Dichtelement 54 anliegt. Am äußeren Endabschnitt des Polrohres 32 befindet sich ein Außengewinde 56 für den Anschluss eines zu betätigenden Ventils (nicht dargestellt), wobei ein O-Ring 58 die Abdichtung bilden kann.

Für die Lagerung und Führung des Magnetkolbens 38 bei dessen Verschiebebewegungen sind zwei Lagerstellen vorgesehen, die beide außerhalb des Bereichs des Ankerraums 36 gelegen sind. Eine Lagerstelle in Form einer Gleitlagerung bildenden Lagerhülse 60 ist in einem Abschlussteil 62 angeordnet, das das Polrohr 32 und damit den Ankerraum 36 nach außen hin abschließt. In der Lagerhülse 60 ist eine Betätigungsstange 64 gelagert, die sich, mit dem Magnetkolben 38 einstückig und zur Achse 4 koaxial, vom benachbarten axialen Ende des Magnetkolbens 38 weg erstreckt, die Lagerhülse 60 durchgreift und in einem äußeren Betätigungsglied 66 endet, das mit dem zu betätigenden Ventil kuppelbar ist. Das Abschlussteil 62 ist in das Ende des Polrohres 32 eingepresst und weist einen zur Achse 4 versetzten Kanal 68 für einen Druckausgleich des Ankerraums 36 zur Außenseite auf. Der Magnetanker 38 weist hierfür ebenfalls einen zur Achse 4 versetzten Kanal 70 auf, der zwischen beiden axialen Enden durchgehend ist. Zur Bildung einer zweiten Lagerstelle ist, zur endseitigen Vertiefung 34 angrenzend, im Polkern 18 eine Sackbohrung 72 ausgebildet, in die ein Lagerzapfen 74 eingreift, der am zugewandten axialen Ende des Magnetankers 38 angebracht ist. Der Lagerzapfen 74 weist ein rundes Schaftteil auf, das eine Gleitlagerung mit einer in der Sackbohrung 72 sitzenden Lagerhülse 76 bildet. Der Lagerzapfen 74 weist einen gegenüber dem Schaftteil verjüngten Endabschnitt 78 auf, der in einer koaxialen Bohrung des Magnetankers 38, beispielsweise mittels einer Presspassung, festgelegt ist. Am Überstand zwischen dem Abschnitt 78 und dem Schaftteil des Lagerzapfens 74 ist eine Antiklebscheibe 80, die in Form einer Ringscheibe den Gewindeabschnitt 78 umgibt, am Magnetanker 38 festgelegt. Im Lagerzapfen 74 ist ein zum Ende der Sackbohrung 72 offener koaxialer Kanal 82 mit einer in den Ankerraum 36 in der Vertiefung 34 führenden Querbohrung zum Druckausgleich vorgesehen.

Zur Erzeugung der Rückstellkraft, gegen die der Magnetanker 38 bei dem ziehenden Magneten in der Fig. 1 nach rechts bewegbar ist, ist eine Schraubenfeder 84 vorgesehen, die den außerhalb des Abschlussteils 62 gelegenen Abschnitt der Betätigungsstange 64 umgibt. Dabei bildet das Abschlussteil 62 als Federanschlag eine Anlagefläche 86, die umfänglich von dem Außengewinde 56 am Ende des Polrohres 32 umgeben ist. Als entgegengesetzter Federanschlag für die Schraubenfeder 84 ist ein Ringkörper 88 vorgesehen, der auf der Betätigungsstange 64 vor dem äußeren Betätigungsglied 66 angeordnet ist. Um eine Einstellung der Wirkung der von der Schraubenfeder 84 erzeugten Rückstellkraft zu ermöglichen, ist der Ringkörper 88 auf der Betätigungsstange 64 in gewünschte Axialpositionen einstellbar. Beim Beispiel von Fig. 1 ist der Ringkörper 88 durch Verstemmen in einer Stemmnut 90 festgelegt, die in gewählter Axialposition ausgebildet ist.

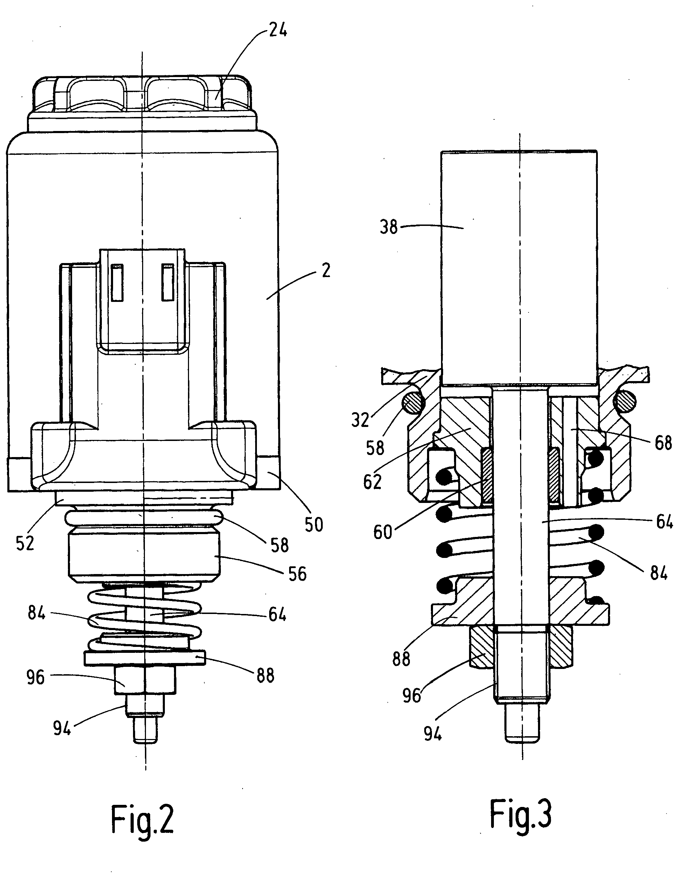

Anstelle der Verstemmung, die in Hinblick auf geringe Fertigungskosten eine vorteilhafte Lösung darstellt, ist bei dem in Fig. 2 und 3 gezeigten Ausführungsbeispiel eine andere Einstellmöglichkeit vorgesehen. Wie am deutlichsten aus Fig. 3 ersichtlich ist, ist am äußeren Endbereich der Betätigungsstange 64 ein Außengewinde 94 gebildet, auf dem eine Einstellmutter 96 sitzt, die einen axial einstellbaren Anschlag für den Ringkörper 88 bildet.

## Patentansprüche

1. Betätigungsvorrichtung, insbesondere zum Betätigen von Ventilen, mit einem Gehäuse (2) und einem darin angeordneten Spulenkörper (6) mit Spulenwicklung (8), der zumindest Teile eines Polrohres (32) und eines sich an dessen eines Ende anschließenden Polkerns (18) der Betätigungsvorrichtung umfasst, mit einem Magnetanker (38), der in einem sich zumindest teilweise innerhalb des Polrohres (32) befindlichen Ankerraum (36) durch Magnetkraftwirkung entgegen einer Rückstellkraft (84) längsverschiebbar ist, und mit einer Betätigungsstange (64), die sich von einem axialen Ende des Magnetankers (38) weg für die Betätigung einer Gerätschaft, insbesondere eines Ventils, nach außen erstreckt, wobei der Magnetanker (38) für seine Längsverschiebung mittels Lagerstellen (60, 76) geführt ist, von denen mindestens je eine außerhalb jedes axialen Endes des Magnetankers (38) und sämtliche außerhalb des Ankerraums (36) gelegen sind, wobei zur Führung des Magnetankers (38) bei dessen Axialbewegungen an dessen beiden axialen Enden ein koaxial vorspringendes Schaftteil (64, 74) der Betätigungsvorrichtung vorgesehen ist, an denen jeweils eine eine genannte Lagerstelle bildende Gleitlagerstelle (60, 76) gebildet ist, wobei das Schaftteil für eine der Gleitlagerstellen (76) an einem Lagerzapfen (74) der Betätigungsvorrichtung gebildet ist, der sich von einem axialen Ende des Magnetankers (38) koaxial in eine Lagerbohrung (72) des Polkerns (18) erstreckt, **dadurch gekennzeichnet, dass** der Magnetanker (38) eine als Sacklochbohrung ausgebildete Bohrung (78) aufweist, in die der Lagerzapfen (74) mit einem Endabschnitt eingreift.

2. Betätigungsvorrichtung nach Anspruch 1, **dadurch gekennzeichnet, dass** das Schaftteil für die andere Gleitlagerstelle (60) an der Betätigungsstange (64) gebildet ist, die sich vom anderen axialen Ende des Magnetankers (38) weg durch ein Abschlussteil (62) der Betätigungsvorrichtung am äußeren Ende des Polrohres (32) hindurch nach außen erstreckt und für die Betätigung eines betreffenden Ventils mit diesem mechanisch kuppelbar ist.

3. Betätigungsvorrichtung nach zumindest einem der vorstehenden Ansprüche, **dadurch gekennzeichnet, dass** der Lagerzapfen (74) in die Sacklochbohrung (78) mit einem verjüngten Endabschnitt eingreift und bevorzugt eine von ihm durchgriffene Antiklebscheibe (80) am Magnetanker (38) fixiert.

4. Betätigungsvorrichtung nach Anspruch 2 oder Anspruch 3, sofern abhängig von Anspruch 2, **dadurch gekennzeichnet, dass** die Gleitlagerstellen durch Lagerhülsen (60, 76) gebildet sind, deren eine (76) in der Lagerbohrung (72) des Polkernes (18) und deren andere (60) in dem Abschlussteil (62) des Polrohres (32) angeordnet ist.

5. Betätigungsvorrichtung nach zumindest einem der vorstehenden Ansprüche, **dadurch gekennzeichnet, dass** eine die Rückstellkraft erzeugende Schraubenfeder (84) auf der Betätigungsstange (64) zwischen einem Abschlussteil (62) des Polrohres (32) und einem als Federanschlag dienenden, von der Betätigungsstange (64) durchgriffenen Ringkörper (88) der Betätigungsvorrichtung eingespannt ist, der auf der Betätigungsstange (64) in gewählten Axialpositionen festlegbar ist.

6. Betätigungsvorrichtung nach Anspruch 5, **dadurch gekennzeichnet, dass** der Ringkörper (88) auf der Betätigungsstange (64) durch Verstemmen in einer Stemmnut (90) festgelegt ist.

7. Betätigungsvorrichtung nach Anspruch 5, **dadurch gekennzeichnet, dass** der Ringkörper (88) mittels einer Einstellmutter (96) festgelegt ist, die auf einem Gewindeabschnitt (94) der Betätigungsstange (64) angeordnet ist.

8. Betätigungsvorrichtung nach zumindest einem der Ansprüche 5 bis 7, **dadurch gekennzeichnet, dass** die Betätigungsstange durch eine außerhalb des Ankerraumes (36) gelegene Lagerstelle (60) im Abschlussteil (62) geführt ist, dass das Abschlussteil (62) als Federanschlag für die Feder (84) eine Anlagefläche (86) aufweist, die umfänglich von einem Außengewinde (56) am Ende des Polrohrs (32) umgeben ist, und dass die Feder (84) die Lagerstelle (60) für die Betätigungsstange (64) zumindest teilweise umfasst.

## Claims

1. Actuating device, especially for actuating valves, with a housing (2) and a coil form (6) arranged in said housing with a coil winding (8), said coil form enclosing at least parts of a pole tube (32) and a pole core (18) of the actuating device which is connected at one end of the pole tube, with a solenoid armature (38), which can be displaced longitudinally in an armature housing (36) located at least partially inside the pole tube (32) by the action of magnetic force against a resetting force (84), and with an actuating rod (64), which extends outwards away from one axial end of the solenoid armature (38) to actuate a component, especially a valve, the longitudinal displacement of the solenoid armature (38) being guided by means of bearing positions (60, 76), at least one of these being positioned outside each axial end of the solenoid armature (38) and all being positioned outside the armature housing (36), a coaxially protruding shaft portion (64, 74) of the actuating device being provided to guide the solenoid armature (38) during its axial movements at both axial ends of said solenoid armature, a sliding bearing position (60, 76) forming a said bearing position being formed on each of said shaft portions, wherein the shaft portion for one of the sliding bearing positions (76) is formed on a bearing pin (74) of the actuating device, said pin extending coaxially from one axial end of the solenoid armature (38) into a bearing hole (72) in the pole core (18), **characterised in that** the solenoid armature (38) comprises a hole (78) in the form of a blind hole, in which the bearing pin (74) engages with one end portion.

2. Actuating device according to claim 1, **characterised in that** the shaft portion for the other sliding bearing position (60) is formed on the actuating rod (64), which extends outwards from the other axial end of the solenoid armature (38) through an end part (62) of the actuating device on the outer end of the pole tube (32) and can be connected mechanically to an appropriate valve in order to actuate said valve.

3. Actuating device according to at least one of the preceding claims, **characterised in that** the bearing pin (74) engages in the blind hole (78) with a tapered end portion and preferably fixes an anti-adhesion disc (80) through which it passes to the solenoid armature (38).

4. Actuating device according to either claim 2 or claim 3, if this is dependent on claim 2, **characterised in that** the sliding bearing positions are formed by bearing bushes (60, 76), one (76) of which is arranged in the bearing hole (72) in the pole core (18) while the other (60) is arranged in the end part (62) of the pole tube (32).

5. Actuating device according to at least one of the preceding claims, **characterised in that** a coil spring (84) generating the resetting force is clamped on the actuating rod (54) between an end part (62) of the pole tube (32) and an annular body (88) of the actuating device acting as a spring stop, through which the actuating rod (64) passes, said annular body being able to be fixed in selected axial positions on the actuating rod.

6. Actuating device according to claim 5, **characterised in that** the annular body (88) is fixed on the actuating rod (64) by caulking in a caulking groove (90).

7. Actuating device according to claim 5, **characterised in that** the annular body (88) is fixed by means of an adjusting nut (96), which is arranged on a threaded portion (94) of the actuating rod (64).

8. Actuating device according to at least one of claims 5 to 7, **characterised in that** the actuating rod is guided in the end part (62) by a bearing position (60) located outside the armature housing (36), **in that** the end part (62) comprises a stop surface (86) as a spring stop for the spring (84), the circumference of said stop surface being surrounded by an outer thread (56) at the end of the pole tube (32), and **in that** the spring (84) at least partially encloses the bearing position (60) for the actuating rod (64).

## Revendications

1. Dispositif d'actionnement, notamment pour l'actionnement de soupapes, comprenant un boîtier (2) et un corps (6) de bobine, qui y est disposé, qui a un enroulement (8) de bobine et qui comprend au moins des parties d'un tube (32) polaire et d'un noyau (18) polaire se raccordant à l'une de ses extrémités, du dispositif d'actionnement,
comprenant une armature (38) d'aimant, qui peut, par l'effet d'une force magnétique à l'encontre d'une force (84) de rappel, coulisser longitudinalement dans un espace (36) d'armature se trouvant, au moins en partie, à l'intérieur du tube (32) polaire, et comprenant une barre (64) d'actionnement, qui s'étend vers l'extérieur en s'éloignant d'une extrémité axiale de l'armature (3) d'aimant pour l'actionnement d'une tige d'appareil, notamment d'une soupape, l'armature (38) d'aimant étant guidée, pour son coulissement longitudinal, au moyen de points (60, 76) de palier, dont, respectivement, l'un au moins est placé à l'extérieur de chaque extrémité axiale de l'armature (38) d'aimant et, tous les autres, à l'extérieur de l'espace (36) d'armature, dans lequel, pour guider l'armature (38) d'aimant dans ses déplacements axiaux, il est prévu, à ses deux extrémités axiales, une partie (64, 74) de tige faisant saillie coaxialement du dispositif d'actionnement où, respectivement, est formé un point (60, 76) de palier lisse formant un dit point d'appui, la partie de tige étant, pour l'un des points (76) de palier lisse, formée sur un tourillon (74) de palier du dispositif d'actionnement, qui s'étend d'une extrémité axiale de l'armature (38) d'aimant, coaxialement dans un trou (72) de palier du noyau (18) polaire, **caractérisé en ce que** l'armature (38) d'aimant a un trou (78) constitué en trou borgne, dans lequel le tourillon (74) de palier pénètre par un tronçon d'extrémité.

2. Dispositif d'actionnement suivant la revendication 1, **caractérisé en ce que** la partie de tige, pour l'autre point (60) de palier lisse, est formée sur une barre (64) d'actionnement, qui s'étend vers l'extérieur, en s'éloignant de l'autre extrémité axiale de l'armature (38) d'aimant, en traversant une partie (62) de fermeture du dispositif d'actionnement à l'extrémité extérieure du tube (32) polaire et qui peut, pour l'actionnement d'une soupape concernée, être reliée mécaniquement à celle-ci.

3. Dispositif d'actionnement suivant au moins l'une des revendications précédentes, **caractérisé en ce que** le tourillon (74) de palier pénètre dans le trou (78) borgne par un tronçon d'extrémité réduit et de préférence immobilise, sur l'armature (38) d'aimant, une rondelle (80) antiadhérente qu'il traverse.

4. Dispositif d'actionnement suivant la revendication 2 ou la revendication 3 dans la mesure où elle dépend de la revendication 2, **caractérisé en ce que** les points de palier lisses sont formés par des douilles (60, 76) de palier, dont l'une (76) est disposée dans le trou (72) de palier du noyau (18) polaire et dans l'autre (60) est disposée dans la partie (62) de fermeture du tube (32) polaire.

5. Dispositif d'actionnement suivant au moins l'une des revendications précédentes, **caractérisé en ce qu'**un ressort (84) hélicoïdal, produisant la force de rappel, est bloqué sur la barre (64) d'actionnement entre une partie (62) de fermeture du tube (32) polaire et une pièce (88) annulaire, servant de butée de ressort et traversée par la barre (64) d'actionnement, du dispositif d'actionnement, pièce qui peut être fixée en des positions axiales sélectionnées sur la barre (64) d'actionnement.

6. Dispositif d'actionnement suivant la revendication 5, **caractérisé en ce que** la pièce (88) annulaire est fixée sur la barre (64) d'actionnement par matage dans une rainure (90) de matage.

7. Dispositif d'actionnement suivant la revendication 5, **caractérisé en ce que** la pièce (88) annulaire est fixée au moyen d'un écrou (96) de réglage, qui est monté sur un tronçon (94) fileté de la barre (64) d'actionnement.

8. Dispositif d'actionnement suivant au moins l'une des revendications 5 à 7, **caractérisé en ce que** la barre d'actionnement est guidée, dans la partie (62) de fermeture, par un point (60) d'appui à l'extérieur de l'espace (36) d'armature, **en ce que** la partie (62) de fermeture a, comme butée de ressort pour le ressort (84), une surface (86) de contact, qui est entourée, sur le pourtour, d'un filetage (56) extérieur à l'extrémité du tube (32) polaire et **en ce que** le ressort (84) entoure, au moins en partie, le point (60) d'appui de la barre (64) d'actionnement.
